Europäisches Patentamt

European Patent Office

Office européen des brevets

(19)

(11) Veröffentlichungsnummer: **0 207 297**
**B1**

(12) **EUROPÄISCHE PATENTSCHRIFT**

(45) Veröffentlichungstag der Patentschrift:
04.01.89

(21) Anmeldenummer: **86107331.0**

(22) Anmeldetag: **30.05.86**

(51) Int. Cl.⁴: **C08G 59/17**, C07C 69/54

(54) Vinylesterharze.

(30) Priorität: **05.06.85 DE 3520113**

(43) Veröffentlichungstag der Anmeldung:
**07.01.87 Patentblatt 87/2**

(45) Bekanntmachung des Hinweises auf die Patenterteilung:
**04.01.89 Patentblatt 89/1**

(84) Benannte Vertragsstaaten:
**BE CH DE FR GB IT LI NL**

(56) Entgegenhaltungen:
**DE-B- 1 153 168**
**US-A- 3 301 743**

(73) Patentinhaber: **BASF Aktiengesellschaft,
Carl-Bosch-Strasse 38, D-6700 Ludwigshafen(DE)**

(72) Erfinder: **Czauderna, Bernhard, Dr., Kapellenweg 34,
D-6945 Hirschberg(DE)**
Erfinder: **Nieberle, Juergen, Dr., Am Huettenwingert 19,
D-6706 Wachenheim(DE)**
Erfinder: **Peter, Roland, Dr., Wildermuthstrasse 33,
D-6700 Ludwigshafen(DE)**
Erfinder: **Nissen, Dietmar, Dr., Ziegelhaeuser
Landstrasse 31, D-6900 Heidelberg(DE)**

## Beschreibung

Die Erfindung betrifft endständig ungesättigte Vinylesterharze auf Basis von Polyphenolen.

Vinylesterharze sind Monomerenlösungen von Umsetzungsprodukten von Epoxidharzen auf Basis von Polyphenolen mit ungesättigten Carbonsäuren bzw. Umsetzungsprodukten der Polyphenole mit Glycidylmethacrylat oder Chlorhydroxypropylmethacrylat.

Üblicherweise werden als Polyphenole Bisphenol A oder Novolake eingesetzt. Ausgehärtete Formkörper aus Vinylesterharzen auf Basis von Bisphenol A sind sehr zäh, weisen aber eine geringe Wärmeformbeständigkeit auf, während solche aus Vinylesterharzen auf Basis von Novolaken, z.B. aus US-A 3 301 743, eine gute Wärmeformbeständigkeit haben, aber sehr spröde sind.

Der Erfindung lag nun die Aufgabe zugrunde, Vinylesterharze bereitzustellen, die Formkörper mit guter Wärmeformbeständigkeit und gleichzeitig hoher Zähigkeit ergeben.

Diese Aufgabe wird erfindungsgemäß gelöst, wenn man als Polyphenole solche der allgemeinen Formeln I oder II einsetzt.

Die erste Gruppe der erfindungsgemäßen Polyphenole hat die allgemeine Formel
$C(ArOH)_m(R')_p-(CR_2)_n-C(ArOH)_m(R'')_p$, (I),
wobei R, R' und R'' gleich oder verschieden sein können und H oder $CH_3$ bedeuten, Ar ein Phenylenrest ist, der gegebenenfalls methyl- oder methoxysubstituiert ist, n = 0, 1 oder 2, m = 1 oder 2 und p = 3-m ist.

Bevorzugt ist dabei R' = R'' = $CH_3$, R = H und Ar = Phenylen.

Besonders bevorzugte Polyphenole der Formel I sind 2,2,3,3-Tetrakis-4-hydroxyphenyl-butan; 2,2,4,4-Tetrakis-(4-hydroxyphenyl-)pentan; 2,2,5,5-Tetrakis-(4-hydroxyphenyl-)hexan und 1,1,3-Tris-(4-hydroxyphenyl-)-propan.

Die Phenole der Formel I sind an sich bekannt, z.B. aus A.M. Paquin, Epoxyverbindungen und Epoxidharze, Springer-Verlag 1958. Sie können hergestellt werden durch Kondensations- bzw. Kondensation/Additionsreaktionen von entsprechenden Carbonylverbindungen (z.B. Diacetyl oder Acrolein) mit Phenolen.

Die zweite Gruppe der erfindungsgemäßen Polyphenole hat die allgemeine Formel
$(ArOH)-CH_2-Ar-CH_2-[(ArOH)-CH_2-Ar-CH_2]_n-(ArOH)$, (II),
wobei Ar ein Phenylenrest ist, der gegebenenfalls methyl- oder methoxysubstituiert ist und n 0 bis 10, vorzugsweise 0, 1 oder 2 ist. Besonders bevorzugt sind dabei α,α'-Dihydroxyphenyl-p-xylol und Hydroxyphenylen 2,6-di-α-hydroxyphenyl-p-xylol. Auch diese Polyphenole sind an sich bekannt, z.B. aus GB-A 1 338 219. Sie können z.B. hergestellt werden durch Friedel-Crafts-Kondensation von α,α'-Dimethoxy-p-xylol und Phenol. Die Polyphenole fallen bei der Herstellung meist als Gemische mit untergeordneten Mengen an Oligomeren an; sie können als solche direkt weiterverarbeitet werden.

Aus diesen Polyphenolen können die Vinylester nach bekannten Verfahren hergestellt werden, z.B. durch Epoxidierung des Polyphenols mit Epichlorhydrin und anschließender Umsetzung mit einer ungesättigten Carbonsäure, vorzugsweise Methacrylsäure, oder durch Umsetzung des Polyphenols mit Glycidyl- oder Chlorhydroxypropylester einer ungesättigten Carbonsäure, bevorzugt Glycidylmethacrylat oder Chlorhydroxypropylmethacrylat.

Die Vinylesterharze enthalten die üblichen copolymerisierbaren Verdünnungsmittel, wie Styrol, Ethylhexyl-, Ethyl-, Butyl- oder Dicyclopentadienylacrylat, Vinylpivalat, Vinylpropionat oder Diallylphthalat.

Daneben können sie noch übliche Zusatzstoffe, wie Verstärkungsfasern, z.B. Glasmatten, Füllstoffe, Eindick- und Thixotropierhilfsmittel, sowie lowshrink- und low-profile-Zusätze enthalten.

Die erfindungsgemäßen Vinylesterharze können je nach eingesetztem Härter bei Temperaturen zwischen 20 und 200°C zu Formkörpern ausgehärtet werden, die z.B. als Automobilteile, wie Blattfedern, oder als SMC-Massen verwendet werden können.

Die in den Beispielen genannten Teile und Prozente beziehen sich auf das Gewicht.

## Beispiele

### A. Herstellung der Polyphenole

1. 1,1,3-Tris-(4-hydroxyphenyl-)propan
42 Mol Phenol, 3 Mol Acrolein und 2 ml konz. Salzsäure wurden zusammen vorgelegt. Die Mischung wurde auf 50°C erwärmt, wobei sie sich verflüssigte. Man rührte 1 Stunde bei dieser Temperatur, bevor auf 80°C erwärmt und eine weitere Stunde gerührt wurde. Das überschüssige Phenol wurde schließlich durch eine Sambaydestillation bei 1 bis 5 mbar und 140°C Heizmanteltemperatur abdestilliert. Die Ausbeute betrug 2,5 Mol.

2. 2,2,3,3-Tetrakis-(4-hydroxyphenyl-)butan
In ein Gemisch aus 21 Mol Phenol, 0,7 Mol Thioglykolsäure und 1 Mol konz. Salzsäure wurde bei 55°C Chlorwasserstoff bis zur Sättigung eingeleitet. Anschließend wurde bei 60°C unter weiterer HCl-Begasung während 30 Minuten 3,5 Mol 2,3-Butandion zugetropft, 5 Stunden bei 65°C nachgerührt und das überschüssige Phenol durch eine Wasserdampfdestillation abgetrennt.

3. 2,2,4,4-Tetrakis-(4-hydroxyphenyl-)pentan
Wie bei 2, jedoch mit 42 Mol Phenol, 1,4 Mol Thioglykolsäure, 2 Mol konz. Salzsäure, 8 Mol 2,4-Pentandion.

4. 2,2,5,5-Tetrakis-(4-hydroxyphenyl-)hexan
Wie bei 2, jedoch mit 21 Mol Phenol, 0,7 Mol Thioglykolsäure, 1 Mol konz. Salzsäure, 3,5 Mol 2,5-Hexandion.

5. Polyphenol der Formel II mit n = 0
16 Mol Phenol und 0,5 mMol Zinntetrachlorid wurden auf 150°C erwärmt. Unter Rühren wurden 4 Mol α,α'-Dimethoxy-p-xylol während 3,5 Stunden zugetropft. Man ließ 1 Stunde nachreagieren, destillierte das entstandene Methanol ab und rührte weitere 90 Minuten bei 150°C. Das Produkt wurde durch eine Sambaydestillation bei 1 mbar und 150°C Heizmanteltemperatur gereinigt. Die Ausbeute betrug 3,3 Mol.

6. Polyphenol der Formel II mit n = 1
Wie bei 5, jedoch mit 21,5 Mol Phenol, 0,6 mMol Sn-Cl₄, 10,8 Mol $\alpha,\alpha'$-Dimethoxy-$\beta$-xylol. Ausbeute 4,7 Mol.

## B. Epoxidierung

1. 1,5 Mol 1,1,3-Tris-(4-hydroxyphenyl-)propan und 27 Mol Epichlorhydrin wurden zum Rückfluß erwärmt. Anschließend wurden 5 Mol 50%ige NaOH zudosiert. Epichlorhydrin und Wasser wurden kontinuierlich aus dem Reaktionsgefäß entfernt, so daß die Wasserkonzentration bei etwa 1% gehalten wurde. Nach einer Nachreaktionszeit von 30 Minuten wurde auf 80°C abgekühlt und mit 500 ml Wasser versetzt. Nach der Phasentrennung wurde die organische Schicht noch zweimal mit Wasser gewaschen und anschließend über einen Sambay bei 1 bis 5 mbar und 140 bis 150°C Heizmanteltemperatur vom überschüssigen Epichlorhydrin befreit. Die Ausbeute betrug 0,9 Mol.

2. Wie bei 1, jedoch mit 1,2 Mol A.2, 27 Mol Epichlorhydrin, 5 Mol 50% NaOH. Ausbeute 0,85 Mol.

3. Wie bei 1, jedoch mit 1,7 Mol A.3, 40,5 Mol Epichlorhydrin, 7,8 Mol 50% NaOH. Ausbeute 1,1 Mol.

4. Wie bei 1, jedoch mit 1,2 Mol A.4, 27 Mol Epichlorhydrin, 5 Mol 50% NaOH. Ausbeute 0,8 Mol.

5. Wie bei 1, jedoch mit 1,5 Mol A.5, 23,7 Mol Epichlorhydrin, 2,8 Mol 50% NaOH. Ausbeute 1,3 Mol.

6. Wie bei 1, jedoch mit 1,03 Mol A.6, 27,6 Mol Epichlorhydrin, 3,3 Mol 50% NaOH. Ausbeute 0,93 Mol.

## C. Herstellung der Vinylesterharze

Zu einem Mol der auf 100°C erwärmten Epoxidverbindungen B1 bis B6 wurde ein Gemisch aus einem Mol Methacrylsäure und 0,005 Mol Benzyltrimethylammoniumchlorid zugegeben und 6 bis 8 h gerührt, wobei 90 bis 95% umgesetzt wurden. Dem Reaktionsgemisch wurde 0,1% (bezogen auf verdünntes Harz) an Hydrochinonmonomethylether zugesetzt, dann wurde unter Kühlen mit 40% Styrol verdünnt.

Zum Vergleich wurden auf die gleiche Weise bekannte Vinylesterharze auf Basis von Bisphenol A (C7) und Novolak (C8) als Polyphenol hergestellt.

## D. Probekörperherstellung und Prüfung

Die Harze C1 bis C8 wurden mit 2% t-Butylperbenzoat gemischt, die Mischung entweder allein oder zusammen mit Glasmatten in eine Form eingebracht und bei 120 bis 140°C verpreßt.

Die Glastemperatur der mattenlosen Formstoffe wurde aus der Temperaturabhängigkeit des Schubmoduls bestimmt und die Zähigkeit der verstärkten Formstoffe mit einem Kugelfalltest verglichen.

Ergebnisse:

| Vinylesterharz | Glastemperatur °C | Zähigkeit (Note 1 bis 5) |
|---|---|---|
| C1 | 185 | 3 |
| C2 | 175 | 3-4 |
| C3 | 170 | 3 |
| C4 | 160 | 4 |
| C5 | 150 | 4 |
| C6 | 155 | 4 |
| C7 | 125 | 2 |
| C8 | 155 | 5 |

## Patentansprüche

1. Endständig ungesättigte Vinylesterharze auf Basis von Polyphenolen, dadurch gekennzeichnet, daß die Polyphenole solche der allgemeinen Formel I sind

$C(ArOH)_m(R')_p-(CR_2)_n-C(ArOH)_m(R'')_p$ , (I),

wobei R, R' und R'' gleich oder verschieden sein können und H oder CH₃ bedeuten, Ar ein Phenylenrest ist, der gegebenenfalls methyl- oder methoxy-substituiert sein kann, n = 0, 1 oder 2, m = 1 oder 2 und p = 3-m ist.

2. Endständig ungesättigte Vinylesterharze auf Basis von Polyphenolen, dadurch gekennzeichnet, daß die Polyphenole solche der allgemeinen Formel II sind

$(ArOH)-CH_2-Ar-CH_2-[(ArOH)-CH_2-Ar-CH_2]_n-(ArOH)$, (II),

wobei Ar ein Phenylenrest ist, der gegebenenfalls methyl- order methoxy-substituiert ist und n 0 bis 10, vorzugsweise 0, 1 oder 2 ist.

3. Vinylesterharze nach Anspruch 1, dadurch gekennzeichnet, daß das Polyphenol 2,2,3,3-Tetrakis-(4-hydroxyphenyl-)butan; 2,2,4,4-Tetrakis-(4-hydroxyphenyl-)pentan; 2,2,5,5-Tetrakis-(4-hydroxyphenyl-)hexan oder 1,1,3-Tris-(4-hydroxyphenyl-)propan ist.

4. Vinylesterharze nach Anspruch 2, dadurch gekennzeichnet, daß das Polyphenol, $\alpha,\alpha'$-Dihydroxyphenyl-p-xylol (n = 0) oder Hydroxyphenylen-2,6-di-$\alpha$-hydroxyphenyl-p-xylol (n = 1) ist.

5. Verfahren zur Herstellung der Vinylester nach den Ansprüchen 1 oder 2, dadurch gekennzeichnet, daß die Polyphenole mit Epichlorhydrin epoxidiert und dann mit einer ungesättigten Carbonsäure umgesetzt werden.

6. Verfahren zur Herstellung der Vinylester nach den Ansprüchen 1 oder 2, dadurch gekennzeichnet, daß die Polyphenole mit Glycidyl- oder Chlorhydroxypropylester einer ungesättigten Carbonsäure umgesetzt werden.

## Claims

1. A vinyl ester resin based on polyphenols and possessing unsaturated terminal groups, wherein the polyphenols are those of the formula I

$C(ArOH)_m(R')_p-(CR_2)_n-(C)ArOH)_m(R'')_p$, (I),

where R, R' and R'' may be identical or different and are each H or CH₃, Ar is phenylene which is unsubstituted or substituted by methyl or methoxy, n is 0, 1 or 2, m is 1 or 2 and p is 3-m.

2. A vinyl ester resin based on polyphenols and possessing unsaturated terminal groups, wherein the polyphenols are those of the formula II
(ArOH)-CH₂-Ar-CH₂-[(ArOH)-CH₂-Ar-CH₂]ₙ-(ArOH), (II),
where Ar is phenylene which is unsubstituted or substituted by methyl or methoxy and n is from 0 to 10, preferably 0, 1 or 2.

3. A vinyl ester resin as claimed in claim 1, wherein the polyphenol is 2,2,3,3-tetrakis-(4-hydroxyphenyl)-butane, 2,2,4,4-tetrakis-(4-hydroxyphenyl)-pentane, 2,2,5,5-tetrakis-(4-hydroxyphenyl)-hexane or 1,1,3-tris-(4-hydroxyphenyl)-propane.

4. A vinyl ester resin as claimed in claim 2, wherin the polyphenol is α,α'-dihydroxyphenyl-p-xylene (n = 0) or hydroxyphenylene-2,6-di-α-hydroxyphenyl-p-xylene (n = 1).

5. A process for the preparation of a vinyl ester as claimed in claim 1 or 2, wherein the polyphenols are epoxidized with epichlorohydrin and the product is then reacted with an unsaturated carboxylic acid.

6. A process for the preparation of a vinyl ester as claimed in claim 1 or 2, wherein the polyphenols are reacted with a glycidyl or chlorohydroxypropyl ester of an unsaturated carboxylic acid.

acide carboxylique non saturé.

6. Procédé de préparation des esters vinyliques suivant la revendication 1 ou la revendication 2, caractérisé en ce que l'on fait réagir les polyphénols avec un ester glycidylique ou chlorohydroxypropylique d'un acide carboxylique non saturé.

## Revendications

1. Résines d'esters vinyliques à insaturation terminale, à base de polyphénols, caractérisées en ce que les polyphénols utilisés possèdent la formule générale I
C(ArOH)ₘ(R')ₚ-(CR₂)ₙ-(C)ArOH)ₘ(R")ₚ, (I),
dans laquelle R, R' et R", qui peuvent être identiques ou différents, désignent un atome d'hydrogène ou un radical CH₃, Ar représente un groupe phénylène éventuellement méthyl- ou méthoxy-substitué, n vaut 0, 1 ou 2, m vaut 1 ou 2 et p = 3-m.

2. Résines d'esters vinyliques à insaturation terminale, à base de polyphénols, caractérisées en ce que les polyphénols utilisés possèdent la formule générale II
(ArOH)-CH₂-Ar-CH₂-[(ArOH)-CH₂-Ar-CH₂]ₙ-(ArOH), (II),
dans laquelle Ar désigne un groupe phénylène éventuellement méthyl- ou méthoxy-substitué et n vaut 0 à 10 et de préférence 0, 1 ou 2.

3. Résines d'esters vinyliques suivant la revendication 1, caractérisé en ce que le polyphénol est choisi parmi le 2,2,3,3-tétrakis-(4-hydroxyphényl)-butane, le 2,2,4,4-tétrakis-(4-hydroxyphényl)-pentane, le 2,2,5,5-tétrakis-(4-hydroxyphényl)-hexane et le 1,1,3-tris-(4-hydroxyphényl)-propane.

4. Résines d'esters vinyliques suivant la revendication 2, caractérisées en ce que le polyphénol est le α,α'-dihydroxyphényl-p-xylène (n = 0) ou l'hydroxyphénylène-2,6-di-α-hydroxyphényl-p-xylène (n = 1).

5. Procéde de préparation des esters vinyliques suivant la revendication 1 ou la revendication 2, caracterisé en ce que les polyphénols sont époxydés par de l'épichlorhydrine, puis on fait réagir avec un